(19) Europäisches Patentamt
European Patent Office
Office européen des brevets

(11) **EP 4 318 631 A1**

(12) **EUROPEAN PATENT APPLICATION**
published in accordance with Art. 153(4) EPC

(43) Date of publication:
**07.02.2024 Bulletin 2024/06**

(21) Application number: **22779354.4**

(22) Date of filing: **12.01.2022**

(51) International Patent Classification (IPC):
*H01M 4/13* $^{(2010.01)}$    *H01M 4/62* $^{(2006.01)}$
*H01M 10/05* $^{(2010.01)}$    *H01M 10/0566* $^{(2010.01)}$
*H01M 50/443* $^{(2021.01)}$    *H01M 50/449* $^{(2021.01)}$

(52) Cooperative Patent Classification (CPC):
**H01M 4/13; H01M 4/62; H01M 10/05;
H01M 10/0566; H01M 50/443; H01M 50/449;
Y02E 60/10**

(86) International application number:
**PCT/JP2022/000626**

(87) International publication number:
**WO 2022/209121 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021060863**

(71) Applicant: **Panasonic Intellectual Property
Management Co., Ltd.
Kadoma-shi, Osaka 571-0057 (JP)**

(72) Inventors:
• **AKUTSU, Makoto
Kadoma-shi, Osaka 571-0057 (JP)**
• **SATO, Takao
Kadoma-shi, Osaka 571-0057 (JP)**

(74) Representative: **Novagraaf International SA
Chemin de l'Echo 3
1213 Onex, Geneva (CH)**

(54) **NEGATIVE ELECTRODE FOR NONAQUEOUS ELECTROLYTE SECONDARY BATTERIES,
SEPARATOR FOR NONAQUEOUS ELECTROLYTE SECONDARY BATTERIES, AND
NONAQUEOUS ELECTROLYTE SECONDARY BATTERY**

(57)    A negative electrode or a separator for a nonaqueous electrolyte secondary battery includes an iron cyanide complex. The iron cyanide complex is, for example, at least one selected from the group consisting of ferrocyanide and ferricyanide. The ferrocyanide is, for example, at least one selected from the group consisting of potassium ferrocyanide, sodium ferrocyanide, calcium ferrocyanide, and ammonium ferrocyanide. The ferricyanide is, for example, at least one selected from the group consisting of potassium ferricyanide, sodium ferricyanide, calcium ferricyanide, and ammonium ferricyanide.

*FIG. 1*

EP 4 318 631 A1

**Description**

[Technical Field]

The present invention relates to a negative electrode for a nonaqueous electrolyte secondary battery, a separator for a nonaqueous electrolyte secondary battery, and a nonaqueous electrolyte secondary battery.

[Background Art]

Nonaqueous electrolyte secondary batteries are used for a power source for small devices such as smartphones, and a power source for vehicles. A nonaqueous electrolyte secondary battery includes a positive electrode, a negative electrode, and a nonaqueous electrolyte. Examples of the nonaqueous electrolyte secondary battery are a lithium ion secondary battery and a lithium (metal) secondary battery. The negative electrode of lithium ion secondary batteries stores lithium ions during charging, and releases lithium ions during discharging. In lithium (metal) secondary batteries, lithium metal deposits during charging at the negative electrode, and the lithium metal dissolves during discharging.
Patent Literature 1 proposes an electrolyte for a lithium secondary battery including a chelating agent that forms a complex with a transition metal ion in the battery, a nonaqueous solvent, and an electrolytic salt. For the chelating agent, EDTA (ethylenediaminetetraacetic acid), NTA (nitrilotriacetic acid) and the like are used.

[Citation List]

[Patent Literature]

[PLT1]
Japanese Patent No. 5507083 Specification

[Summary of Invention]

[Technical Problem]

During charging of secondary batteries, side reactions other than the battery reaction (release of lithium ions at the positive electrode and storage of lithium ions at the negative electrode) may occur. Specifically, a part of the metal (excluding lithium, mainly including transition metals such as copper, iron, etc.) that is present at the positive electrode is oxidized, metal ions are dissolved into the nonaqueous electrolyte, and the dissolved metal ions are reduced at the negative electrode, which may cause metal deposition. The metal deposition may cause a decrease in the charge and discharge efficiency of secondary batteries.
The chelating agent added to the electrolyte described in Patent Literature 1 forms a complex with the dissolved metal ions, which may suppress the metal deposition at the negative electrode to a certain degree: however, in view of solubility in the electrolyte, it is difficult to include a large amount of the chelating agent and the effects are limited, and when a large amount of metal ions are dissolved, suppression of the deposition of the metal at the negative electrode is difficult.

[Solution to Problem]

An aspect of the present invention relates to a negative electrode for a nonaqueous electrolyte secondary battery including an iron cyanide complex.
Another aspect of the present invention relates to a nonaqueous electrolyte secondary battery including a positive electrode, a negative electrode, and a nonaqueous electrolyte, wherein the negative electrode is the above-described negative electrode for a nonaqueous electrolyte secondary battery.
Still another aspect of the present invention relates to a separator for a nonaqueous electrolyte secondary battery including an iron cyanide complex.
Still another aspect of the present invention relates to a nonaqueous electrolyte secondary battery including a positive electrode, a negative electrode, a separator interposed between the positive electrode and the negative electrode, and a nonaqueous electrolyte, wherein the separator is the above-described separator for a nonaqueous electrolyte secondary battery.

[Advantageous Effects of Invention]

The present invention can improve the charge and discharge efficiency of nonaqueous electrolyte secondary batteries.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] FIG. 1 is a partially cutaway oblique view of a nonaqueous electrolyte secondary battery in an embodiment of the present invention.

[FIG. 2] FIG. 2 schematically shows a configuration of the electrode group of FIG. 1.

[Description of Embodiments]

The negative electrode for a nonaqueous electrolyte secondary battery of an embodiment of the present invention includes an iron cyanide complex. The separator for a nonaqueous electrolyte secondary battery of an embodiment of the present invention includes an iron cyanide complex. In the nonaqueous electrolyte secondary battery, at least one of the negative electrode and the separator (hereinafter, also referred to as a negative electrode and the like) may include the iron cyanide complex.

During charging of the secondary battery, a metal that is present in the positive electrode (excluding lithium, hereinafter, referred to as a metal A) is partly oxidized and dissolved into the nonaqueous electrolyte. The metal A mainly includes transition metals such as iron, copper, and the like, and is derived from the positive electrode material (mainly, the positive electrode active material) and/or impurities mixed therein during production processes of the battery (positive electrode production and the like). The ions of the dissolved metal A may form a complex salt with the iron cyanide complex, and the complex salt is not easily soluble to the nonaqueous electrolyte. In this manner, deposition of the metal A at the negative electrode is suppressed, and a decrease in the battery voltage caused by the deposition of the metal A at the negative electrode and a decrease in the charge and discharge efficiency caused therefrom are suppressed.

The addition of the iron cyanide complex to the negative electrode may be performed by attaching the iron cyanide complex to a surface of the negative electrode mixture layer and/or of the negative electrode current collecting sheet (hereinafter, also referred to as a negative electrode surface), or by adding the iron cyanide complex into the negative electrode mixture layer. The addition of the iron cyanide complex to the separator may be performed by attaching the iron cyanide complex to a surface of a substrate sheet (hereinafter, also referred to as a separator surface), or by adding the iron cyanide complex into the substrate sheet. Even when the amount of the metal A is large (e.g., when the amount of the transition metal derived from the positive electrode active material is large), the amount of the iron cyanide complex to be added can be suitably adjusted in accordance with the amount of the metal A, to an extent that does not damage performance of the negative electrode and the like.

The iron cyanide complex includes a complex ion composed of an iron ion (central metal ion), and a cyanide ion ($CN^-$) (ligand) bonded to the iron ion. The iron cyanide complex is included in the negative electrode as a salt of an alkali metal element (excluding lithium), a Group 2 element, ammonium, or the like. The iron cyanide complex to be added to the negative electrode and the like is hardly soluble to the nonaqueous electrolyte, and easily stays in the negative electrode and the like even after the battery configuration.

The iron cyanide complex to be added to the negative electrode and the like is formed with a cation and an anion (complex ion). For the cation, preferably, a cation of an alkali metal element, a cation of a Group 2 element, and an ammonium cation ($NH_4^+$) are exemplified. For the cation of an alkali metal element, a potassium (K) cation, and a sodium (Na) cation are exemplified. For the cation of a Group 2 element, a calcium (Ca) cation is exemplified. Preferably, in particular, the potassium cation is preferred. Examples of the complex ion include a ferrocyanide ion: $[Fe(CN)_6]^{4-}$, and a ferricyanide ion: $[Fe(CN)_6]^{3-}$.

When the iron cyanide complex is included in the negative electrode and the like as a salt of an alkali metal element, a salt of a Group 2 element, or an ammonium salt, in view of chemical stability, the iron cyanide complex may easily form a stable complex salt with the metal A (mainly transition metal).

The iron cyanide complex is preferably at least one selected from the group consisting of ferrocyanide and ferricyanide. The ferrocyanide is preferably at least one selected from the group consisting of potassium ferrocyanide, sodium ferrocyanide, calcium ferrocyanide, and ammonium ferrocyanide. The ferricyanide is preferably at least one selected from the group consisting of potassium ferricyanide, sodium ferricyanide, calcium ferricyanide, and ammonium ferricyanide. In particular, in view of easily forming a salt that is insoluble to the nonaqueous electrolyte with ions of the metal A, potassium ferrocyanide and potassium ferricyanide are more preferable.

The shape of the iron cyanide complex is not particularly limited, but is preferably particles. The iron cyanide complex is not easily soluble to the nonaqueous electrolyte, is easily present in a solid state even after the battery configuration, and easily stays in the negative electrode and the like. The average particle size of the particles of the iron cyanide complex may be 0.1 $\mu$m or more and 50 $\mu$m or less, or 1 $\mu$m or more and 50 $\mu$m or less. When the average particle size of the particles of the iron cyanide complex is 0.1 $\mu$m or more (or 1 $\mu$m or less), the deposition of the metal A at the negative electrode is easily suppressed, and the charge and discharge efficiency may easily improve. Furthermore, when the average particle size of the particles of the iron cyanide complex is 50 $\mu$m or less, the effects on the negative electrode and the like by the addition of the iron cyanide complex are easily reduced, and a high capacity can be easily achieved. The "particles " includes primary particles, secondary particles, and coagulated primary particles and secondary particles, and in addition to general grains or particles, also includes aggregation or agglomeration. The particle size (or diameter of coagulation) may be regarded as a diameter of an equivalent circle having the same area as the area encircled by a contour of a particle (or coagulation), viewed in a cross section sample as described later.

When the negative electrode includes the iron cyanide complex, the average particle size of the particles of the iron cyanide complex can be determined by the following method.

A battery (battery before initial charge or battery in an initial stage in a completely discharged state) is disassembled, the negative electrode is taken out, and images of the negative electrode surface (or a negative electrode cross section) are obtained with a scanning electron microscope (SEM). The above-described completely discharged state is a state in which a secondary battery is discharged to the depth of discharge (DOD) of 90% or more, and for example, a state in which a secondary battery is discharged to the lower limit voltage in a predetermined voltage range in the field of devices where the secondary battery is used. Alternatively, SEM images of the negative electrode surface (or a negative electrode cross section) immediately after production can be obtained as well.

Using the SEM images, the areas of random 20 to 30 iron cyanide complex particles are measured, and the diameter (equivalent circle diameter) of a perfect circle having a size corresponding to the each measured area is calculated, and their average value is calculated as the average particle size. The iron cyanide complex included in the negative electrode can be checked by analysis with SEM-EDX (energy-dispersive X-ray spectroscopy). When the particles of the iron cyanide complex are attached to the negative electrode surface, the average particle size can be determined by using SEM images of the negative electrode surface. When the iron cyanide complex particles are included in the negative electrode mixture layer, the average particle size can be determined by using SEM images of the negative electrode cross section. When the separator includes the iron cyanide complex as well, determination can be performed in the same manner as described above.

The iron cyanide complex content of the negative electrode may be, per 100 parts by mass of the negative electrode active material (e.g., carbon material such as graphite), 0.01 parts by mass or more and 10 parts by mass or less. When the negative electrode surface is covered with the iron cyanide complex, the iron cyanide complex content of the negative electrode means the amount of the iron cyanide complex attached at the negative electrode surface. In this case, while keeping characteristics of the negative electrode (e.g., low negative electrode resistance), the deposition of the metal A at the negative electrode can be easily suppressed. The iron cyanide complex content of the negative electrode can be determined by analysis such as inductively coupled plasma mass spectrometry (ICP-MS).

Preferably, the iron cyanide complex is attached to a surface of the negative electrode (surface of the negative electrode mixture layer and/or the negative electrode current collecting sheet). Preferably, the iron cyanide complex is attached at least on the surface of the negative electrode facing the positive electrode. In this case, the deposition of the metal A at the negative electrode and decrease in the charge and discharge efficiency caused therefrom can be efficiently suppressed.

When the iron cyanide complex is attached to the negative electrode surface, the amount of iron derived from the iron cyanide complex attached per 1 cm$^2$ of the negative electrode surface may be, for example, 1 nmol or more and 30 $\mu$mol or less. The above-described amount of iron derived from the iron cyanide complex can be determined by, for example, analyzing the negative electrode in a secondary battery before the initial charging (or negative electrode immediately after production) by X-ray photoelectron spectroscopy (XPS).

The negative electrode may include a negative electrode mixture layer including the negative electrode active material, a negative electrode current collecting sheet supporting the negative electrode mixture layer, and the iron cyanide complex attached to a surface of the negative electrode mixture layer at an opposite side to a surface supported by the negative electrode current collecting sheet. When the negative electrode current collecting sheet has a region not supporting the negative electrode mixture layer, the iron cyanide complex may be attached to the surface of such a region of the negative electrode current collecting sheet. The negative electrode mixture layer may be formed on one surface of the negative electrode current collecting sheet, or on both surfaces of the negative electrode current collecting sheet.

With a case of a lithium (metal) secondary battery in which lithium metal deposits during charging at the negative electrode and the lithium metal dissolves during discharging, the negative electrode may include a negative electrode current collecting sheet, and the iron cyanide complex attached to the surface of the negative electrode current collecting sheet.

The separator may include a substrate sheet, and the iron cyanide complex attached to a surface of the substrate sheet. The iron cyanide complex may be attached to one surface of the substrate sheet, or on both surfaces of the substrate sheet.

Preferably, the negative electrode (or separator) surface is covered with the iron cyanide complex by a coverage of, 5% or more and 95% or less, or 10% or more and 90% or less. When the coverage is 5% or more (or 10% or more), the deposition of the metal A at the negative electrode can be easily suppressed, and charge and discharge efficiency easily improves. When the coverage is 95% or less (or 90% or more), the effects of the addition of the iron cyanide complex on the negative electrode and the like are easily reduced (e.g., a low negative electrode resistance can be easily kept), and a high capacity can be easily achieved.

The coverage with the iron cyanide complex at the negative electrode (or separator) surface means the ratio of the area of the region in which the iron cyanide complex is attached to the surface relative to the entire area of the negative electrode (or separator) surface facing the positive electrode. For example, when the negative electrode is a sheet having a first surface and a second surface and both of the first surface and the second surface are facing the positive electrode, preferably, in both of the first surface and the second surface, the coverage is within the above-described range.

The coverage of the negative electrode surface with the iron cyanide complex can be determined by the following method.

A battery (battery before initial charge or battery in an initial stage in a completely discharged state) is disassembled, the negative electrode is taken out, and SEM images of the negative electrode surface (surface facing the positive electrode) are obtained. The SEM images may be obtained from the negative electrode surface immediately after production. Using the SEM images, an area S0 (e.g., visual field area: 0.04 $mm^2$ to 1.00 $mm^2$) of the entire negative electrode surface and an area S1 of a region to which the iron cyanide complex is attached in the negative electrode surface are determined, and the ratio of S1 relative to S0 (percentage) is calculated as a coverage. The coverages are determined for random 5 to 10 points on the negative electrode surface, and their average value is calculated. The iron cyanide complex on the negative electrode surface can be checked by SEM-EDX analysis. Also, the coverage of the separator surface with the iron cyanide complex can be determined in the same manner as described above.

The iron cyanide complex can be attached to the negative electrode surface (or separator surface) by, for example, applying a processing solution including the iron cyanide complex and water to the negative electrode surface (or separator surface) and drying. The iron cyanide complex is easily soluble to water, and using an aqueous solution of the iron cyanide complex for the processing solution, the iron cyanide complex can be easily attached to the negative electrode surface (or separator surface) homogeneously. The amount (coverage) of the iron cyanide complex attached to the negative electrode surface (or separator surface) may be adjusted by changing the iron cyanide complex concentration in the processing solution. The processing solution may further include a component (e.g., binder) other than the iron cyanide complex. Examples of the binder include fluorine resin, acrylic resin, and the like to be described later. The processing solution can be applied by, without particular limitation, a method of coating using various coaters, immersing, or spraying.

A nonaqueous electrolyte secondary battery in an embodiment of the present invention includes a positive electrode, a negative electrode, and a nonaqueous electrolyte, and the negative electrode is the above-described negative electrode for a nonaqueous electrolyte secondary battery. A nonaqueous electrolyte secondary battery in another embodiment of the present invention includes a positive electrode, a negative electrode, a separator interposed between the positive electrode and the negative electrode, and a nonaqueous electrolyte, and the separator is the above-described separator for a nonaqueous electrolyte secondary battery. In the nonaqueous electrolyte secondary battery in the above another embodiment of the present invention, the negative electrode may be the above-described negative electrode for a nonaqueous electrolyte secondary battery.

In the following, each of the elements of the nonaqueous electrolyte secondary battery will be described more specifically.

(Positive electrode)

The positive electrode includes a positive electrode active material capable of storing and releasing lithium ions. The positive electrode may include a positive electrode mixture layer including a positive electrode active material, and a positive electrode current collecting sheet supporting the positive electrode mixture layer. The positive electrode mixture layer can be formed by applying a positive electrode slurry in which the positive electrode mixture is dispersed in a dispersion medium on a surface of the positive electrode current collecting sheet, and drying the slurry. The dried coating may be rolled, as necessary. The positive electrode mixture layer may be formed on one surface of the positive electrode current collecting sheet, or on both surfaces thereof.

The positive electrode mixture may contain the positive electrode active material as an essential component, and may contain a binder, a thickener, and a conductive agent as optional components.

For the positive electrode active material, for example, a lithium transition metal composite oxide having a layered rock salt type structure is used. In particular, a lithium transition metal composite oxide including Ni, Co, and at least one of Al and Mn (hereinafter, also referred to as composite oxide NC) is promising because it can bring out a high capacity and a high voltage. With a higher Ni content of the composite oxide NC, it is advantageous in terms of costs, and a higher capacity can be ensured.

The composition of the composite oxide NC can be represented by, for example, $Li_\alpha Ni_{(1-x1-x2-x3-y)}Co_{x1}Mn_{x2}Al_{x3}M_yO_{2+\beta}$ ($0.95 \leq \alpha \leq 1.05$, $0.5 \leq 1-x1-x2-x3-y \leq 0.95$, $0 < x1 \leq 0.04$, $0 \leq x2 \leq 0.1$, $0 \leq x3 \leq 0.1$, $0 < x2 + x3 \leq 0.2$, $0 \leq y \leq 0.1$, $-0.05 \leq \beta \leq 0.05$). In the formula, M is at least one selected from the group consisting of Ti, Zr, Nb, Mo, W, Fe, Zn, B, Si, Mg, Ca, Sr, and Y.

The $(1-x1-x2-x3-y)$ representing the Ni ratio (atomic ratio) preferably satisfies, in view of a higher capacity, $0.8 \leq 1-x1-x2-x3-y \leq 0.95$, more preferably satisfies $0.9 \leq 1-x1-x2-x3-y \leq 0.95$.

The "x1" representing the Co ratio (atomic ratio) is larger than 0 and 0.04 or less, preferably 0.02 or less, more preferably 0.015 or less.

The "x2" representing the Mn ratio (atomic ratio) is $0 \leq x2 \leq 0.1$, preferably $0 < x2 \leq 0.1$. The composite oxide NC including Mn is relatively inexpensive and has a high capacity.

The "x3" representing the Al ratio (atomic ratio) is $0 \leq x3 \leq 0.1$, preferably $0.03 \leq x3 \leq 0.1$, and can be $0.05 \leq x3 \leq 0.1$. The composite oxide NC including Al stabilizes the crystal structure, and easily ensures excellent cycle characteristics.

The content of the element constituting the composite oxide NC can be measured by an inductively coupled plasma emission spectroscopy device (ICP-AES), an electron beam micro analyzer (EPMA), EDX, and the like.

For the positive electrode active material, an olivine structure lithium transition metal composite oxide ($LiFePO_4$, etc.), or a spinel structure lithium transition metal composite oxide ($LiMn_2O_4$, etc.) may be used.

For the binder, for example, a resin material is used. Examples of the binder include fluorine resin (e.g., polyvinylidene fluoride (PVDF), polyhexafluoropropylene, polytetrafluoroethylene), polyolefin resin (e.g., polyethylene, polypropylene), polyamide resin (e.g., aramid resin), polyimide resin (e.g., polyimide, polyamide-imide), acrylic resin (e.g., polyacrylic acid, polymethacrylic acid, an acrylic acid-methacrylic acid copolymer, an ethylene-acrylic acid copolymer, or a salt thereof), vinyl resin (e.g., polyvinyl acetate), and a rubber material (e.g., styrene-butadiene copolymer rubber (SBR)). A kind of binder may be used singly, or two or more kinds thereof may be used in combination.

Examples of the thickener include cellulose derivatives such as cellulose ether. Examples of the cellulose derivative include carboxymethyl cellulose (CMC) and a modified product thereof, and methylcellulose. The CMC derivatives also include CMC salts. Examples of the salt include an alkali metal salt (e.g., sodium salt), and an ammonium salt. A kind of thickener may be used singly, or two or more kinds thereof may be used in combination.

Examples of the conductive agent include conductive fiber and conductive particles. Examples of the conductive fiber include carbon fiber, carbon nanotube, and metal fiber. For the conductive particles, conductive carbon, metal powder, and the like are used. For the conductive carbon, carbon black such as acetylene black (AB), graphite, and the like are used. A kind of conductive agent may be used singly, or two or more kinds thereof may be used in combination.

Examples of the dispersion medium used for the positive electrode slurry include alcohol (e.g., ethanol), ether (e.g., tetrahydrofuran), amide (e.g., dimethylformamide), N-methyl-2-pyrrolidone (NMP), or a solvent mixture thereof.

The positive electrode current collecting sheet is selected according to the kind of the nonaqueous electrolyte secondary battery. For the positive electrode current collecting sheet, a nonporous or porous (mesh and the like) metal sheet (metal foil and the like) can be used. Examples of the material for the positive electrode current collecting sheet include stainless steel, aluminum, an aluminum alloy, titanium or the like.

(Negative electrode)

The negative electrode may include a negative electrode mixture layer including a negative electrode active material, and a negative electrode current collecting sheet supporting the negative electrode mixture layer. The negative electrode mixture layer can be formed by applying a negative electrode slurry in which the negative electrode mixture is dispersed in a dispersion medium on a surface of the negative electrode current collecting sheet, and drying the slurry. For the dispersion medium, water can be used. The dried coating may be rolled, as necessary. The negative electrode mixture layer may be formed on one surface of the negative electrode current collecting sheet, or on both surfaces thereof. In the case of a lithium secondary battery, the negative electrode may include a negative electrode current collecting sheet.

The negative electrode mixture may include, as an essential component, a negative electrode active material, and as optional components, a binder, a thickener, a conductive agent, and the like.

The iron cyanide complex is preferably attached to a surface of the negative electrode (surface of the negative electrode mixture layer and/or the negative electrode current collecting sheet), but may be included in the negative electrode mixture (layer). That is, the negative electrode may include a negative electrode mixture layer including a negative electrode active material and an iron cyanide complex, and a negative electrode current collecting sheet supporting the negative electrode mixture layer. In this case, the iron cyanide complex can be added to the above-described negative electrode slurry to produce the negative electrode.

For the negative electrode active material, a metal lithium, or a lithium alloy may be used, but a material that is capable of electrochemically storing and releasing lithium ions is suitably used. Examples of such a material include a carbon material, a Si-containing material, and a Sn-containing material. The negative electrode may include one kind of negative electrode active material, or two or more kinds can be used in combination. Preferable negative electrode active materials are a carbon material and a Si-containing material. The carbon material can be combined with the Si-containing material.

Examples of the carbon material include graphite, graphitizable carbon (soft carbon), and non-graphitizable carbon (hard carbon). A kind of carbon material may be used singly, or two or more kinds thereof may be used in combination.

The carbon material is preferably graphite, because it has excellent charge and discharge stability, and has a small irreversible capacity. Graphite includes, for example, natural graphite, artificial graphite, graphitized mesophase carbon particles, and the like. The graphite particles may partially include amorphous carbon, graphitizable carbon, or non-graphitizable carbon.

Examples of the Si-containing material include elemental Si, a silicon alloy, and a silicon compound (silicon oxide, silicate, etc.). Examples of the silicon oxide include SiOx particles. The "x" is, for example, $0.5 \leq x < 2$, or may be $0.8 \leq x \leq 1.6$. A kind of Si-containing material may be used singly, or two or more kinds thereof may be used in combination.

Examples of the binder include those resin materials exemplified for the positive electrode. The conductive agent can be selected, for example, from those exemplified for the positive electrode. For the negative electrode current collecting sheet, a nonporous or porous (mesh and the like) metal sheet (metal foil and the like) can be used. For the material of the negative electrode current collecting sheet, stainless steel, nickel, a nickel alloy, copper, a copper alloy, or the like can be exemplified.

(Separator)

The separator has a high ion permeability, and has suitable mechanical strength and insulating properties. For the substrate sheet constituting the separator, for example, a microporous thin film, a woven fabric, or a nonwoven fabric, or a laminate of at least two selected from these can be used. For the substrate sheet material, polyolefin (e.g., polypropylene, polyethylene) is preferable.

The iron cyanide complex is preferably attached to a surface of the separator (surface of the substrate sheet), but may be included in the substrate sheet. For example, the iron cyanide complex may be included in the pores of the microporous thin film, or a woven fabric or nonwoven fabric may be produced using a fiber material to which the iron cyanide complex is attached.

(Nonaqueous electrolyte)

The nonaqueous electrolyte includes, for example, a nonaqueous solvent, and a lithium salt dissolved in the nonaqueous solvent. The concentration of lithium salt in the nonaqueous electrolyte is, for example, 0.5 mol/L or more and 2 mol/L or less.

Examples of the nonaqueous solvent include cyclic carbonate, chain carbonate, cyclic carboxylate, and chain carboxylate. Examples of the cyclic carbonate include propylene carbonate (PC) and ethylene carbonate (EC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate (MA), ethyl acetate, propyl acetate, methyl propionate, ethyl propionate, and propyl propionate. The nonaqueous electrolyte may include one kind of the nonaqueous solvent, or two or more kinds may be used in combination.

Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, borate, and an imide salt. Examples of the borate include lithium bis(1,2-benzene diolate (2-)-O,O') borate, lithium bis(2,3-naphthalene diolate (2-)-O,O') borate, lithium bis(2,2'-biphenyl diolate (2-)-O,O') borate, and lithium bis(5-fluoro-2-olate-1-benzene sulfonic acid-O,O') borate. Examples of the imide salt include lithium bisfluorosulfonyl imide ($LiN(FSO_2)_2$), lithium bis(trifluoromethanesulfonyl) imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). The nonaqueous electrolyte may include one kind of lithium salt, or two or more kinds thereof may be used in combination.

In an example structure of the nonaqueous electrolyte secondary battery, an electrode group and a nonaqueous electrolyte are accommodated in an outer package, and the electrode group has a positive electrode and a negative electrode wound with a separator interposed therebetween. Alternatively, instead of the wound type electrode group, other types of electrode group can be used, such as a laminate type electrode group, in which the positive electrode and the negative electrode are laminated with the separator interposed therebetween. The nonaqueous electrolyte secondary battery may be in any form, e.g., cylindrical, prism-shaped, coin-shaped, button-shaped, laminated, etc.

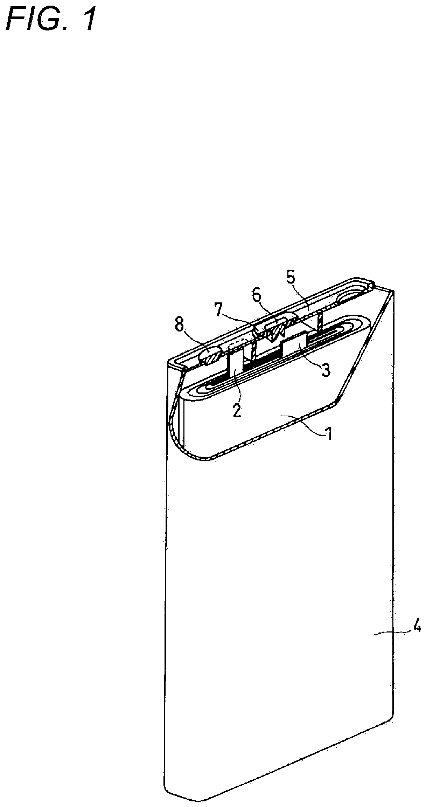

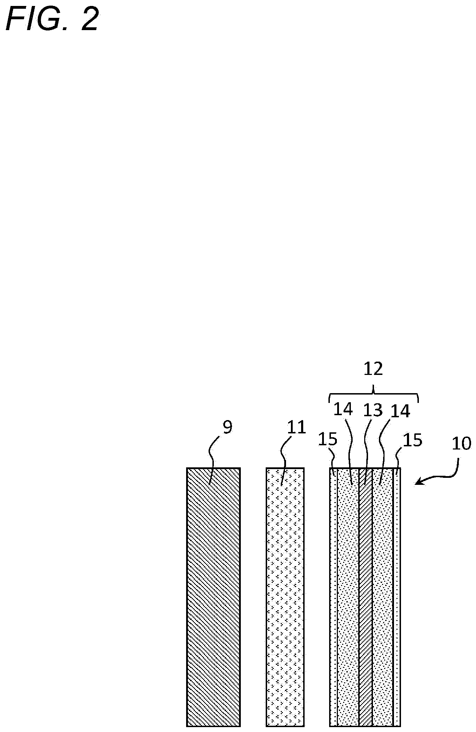

In the following, a structure of a rectangular nonaqueous electrolyte secondary battery is described with reference to FIG. 1 as an example of a nonaqueous electrolyte secondary battery in an embodiment of the present invention. FIG. 1 is a partially cutaway oblique view of a nonaqueous electrolyte secondary battery in an embodiment of the present invention. FIG. 2 schematically shows a configuration of the electrode group of FIG. 1.

As shown in FIG. 1, the battery includes a bottomed rectangular battery case 4, an electrode group 1 accommodated in the battery case 4, and a nonaqueous electrolyte (not shown). The electrode group 1 is composed of an elongated strip positive electrode 9, an elongated strip negative electrode 10, and a separator 11 interposed therebetween. The electrode group 1 is formed by winding the positive electrode 9, the negative electrode 10, and the separator 11 around a flat core and removing the core.

The negative electrode 10 has a negative electrode main body 12, and a cover layer 15 of an iron cyanide complex covering both surfaces of the negative electrode main body 12. More specifically, the negative electrode main body 12 includes a negative electrode current collecting sheet 13, and a negative electrode mixture layer 14 supported on both surfaces of the negative electrode current collecting sheet 13. The cover layer 15 of the iron cyanide complex is formed on a surface of the negative electrode mixture layer 14 (surface at an opposite side to a surface supported by the negative electrode current collecting sheet 13). When the coverage of the negative electrode surface with the iron cyanide complex is high (the amount of the iron cyanide complex attached to the negative electrode surface is large), as in the case of the cover layer 15 of FIG. 2, the iron cyanide complex may be formed into a layer.

FIG. 2 shows the iron cyanide complex (cover layer 15) formed into a layer, but when the coverage of the negative electrode surface with the iron cyanide complex is low (the amount of the iron cyanide complex attached to the negative electrode surface is small), the iron cyanide complex particles may be disposed to be dispersed on the negative electrode surface. FIG. 2 shows the cover layer 15 formed on the surface of the negative electrode main body 12, but the cover layer may be formed on the surface of the separator 11.

The negative electrode current collecting sheet of the negative electrode is electrically connected to a negative electrode terminal 6 provided in a sealing plate 5 through a negative electrode lead 3. The negative electrode terminal 6 is insulated from the sealing plate 5 by a resin-made gasket 7. The positive electrode current collecting sheet of the positive electrode is connected to the reverse side of the sealing plate 5 through a positive electrode lead 2. That is, the positive electrode lead 2 is electrically connected to the battery case 4 serving also as a positive electrode terminal. The periphery of the sealing plate 5 is fitted to the open end of the battery case 4, and the fitting portion is laser welded. The injection hole for the electrolyte provided in the sealing plate 5 is plugged with a sealing plug 8.

[Examples]

The present invention will be described in detail below with reference to Examples and Comparative Examples; the present invention, however, is not limited to the following Examples.

<Examples 1 to 5>

A nonaqueous electrolyte secondary battery (evaluation cell) was made and evaluated as below.

(Production of positive electrode)

A positive electrode slurry was produced by mixing 100 parts by mass of a positive electrode active material, 1 part by mass of AB, 1 part by mass of PVDF, and a suitable amount of NMP. Then, the positive electrode slurry was applied on one surface of an aluminum foil, and the coating film was dried and rolled to form a positive electrode mixture layer (thickness 95 $\mu$m, density 3.6 g/cm$^3$) on one surface of the aluminum foil, thereby producing a positive electrode. For the positive electrode active material, $LiNi_{0.88}Co_{0.09}Al_{0.03}O_2$ was used.

(Production of negative electrode)

A negative electrode slurry was prepared by mixing 98 parts by mass of the negative electrode active material (graphite), 1 part by mass of a sodium salt of CMC, 1 part by mass of SBR, and a suitable amount of water. Next, the negative electrode slurry was applied to one surface of a copper foil, which was the negative electrode current collecting sheet, and the coating film was dried and then rolled to form a negative electrode mixture layer on one surface of the copper foil.

(Coverage of negative electrode surface with iron cyanide complex)

An aqueous solution of the iron cyanide complex was applied onto a surface of the negative electrode mixture layer (surface facing the positive electrode), and then dried. In this manner, the negative electrode mixture layer surface was covered with the iron cyanide complex. Potassium ferrocyanide: $K_4[Fe(CN)_6]$ was used for the iron cyanide complex. The iron cyanide complex concentration of the aqueous solution was changed so that the coverage of the negative electrode surface (negative electrode mixture layer surface) with the iron cyanide complex was the value as shown in Table 1.

In Examples 1 to 5, the amount of the iron cyanide complex attached to the negative electrode surface was in a range of 0.08 parts by mass to 1.6 parts by mass relative to 100 parts by mass of the negative electrode active material. In Examples 1 to 5, the average particle size of the iron cyanide complex particles attached to the negative electrode surface determined by the above-described method was in a range of 10 $\mu$m to 30 $\mu$m.

(Nonaqueous electrolyte preparation)

A nonaqueous electrolyte was prepared by dissolving $LiPF_6$ in a solvent mixture of EC and EMC (EC: EMC = 3:7(volume ratio)). The $LiPF_6$ concentration in the nonaqueous electrolyte was 1.0 mol/L.

(Nonaqueous electrolyte secondary battery production)

First, the positive electrode was cut into a predetermined shape, thereby producing a positive electrode for evaluation. The positive electrode had a region of 20 mm × 20 mm that works as the positive electrode, and a connection region of 5 mm × 5 mm for connection with a tab lead. Thereafter, the positive electrode mixture layer formed on the above-described connection region was scraped to expose the positive electrode current collecting sheet. Afterwards, the exposed portion of the positive electrode current collecting sheet was connected to the positive electrode tab lead and a predetermined region of the outer periphery of the positive electrode tab lead was covered with an insulating tab film. Afterwards, a copper particle having a diameter of about 100 $\mu$m was intentionally embedded at about the center of the positive electrode mixture layer.

The negative electrode was cut into the same shape as the positive electrode, thereby producing a negative electrode for evaluation. The negative electrode mixture layer formed on the connection region similarly to the positive electrode was peeled off to expose the negative electrode current collecting sheet. Afterwards, the exposed portion of the negative electrode current collecting sheet was connected to the negative electrode tab lead in the same manner as the positive electrode, and a predetermined region of the outer periphery of the negative electrode tab lead was covered with an insulating tab film.

A cell was produced using the positive electrode and negative electrode for evaluation. First, the positive electrode and the negative electrode were allowed to face each other with a separator interposed therebetween so that the positive electrode mixture layer overlapped with the negative electrode mixture layer, thereby producing an electrode group. For the separator, a polyethylene-made separator having a thickness of 12 $\mu$m was used. Next, an Al laminate film (thickness 100 $\mu$m) cut into a rectangle of 60 × 90 mm was folded into half, and the long side end of 60 mm was heat sealed at 230°C, to make it into an envelope of 60 × 45 mm. Afterwards, the produced electrode group was put into the envelope, and the end face of the Al laminate film and the position of the insulating tab film of the tab leads were aligned and heat sealed at 230°C. Next, 0.3 cm$^3$ of the nonaqueous electrolyte was injected from the not heat-sealed portion of the short side of the Al laminate film, and after the injection, they were allowed to stand for 5 minutes under a reduced pressure of 0.06 MPa to impregnate the electrode mixture layers with the nonaqueous electrolyte. Lastly, the end face of the injected side of the Al laminate film was heat sealed at 230°C, thereby producing an evaluation cell. The evaluation cell was prepared in a dry air atmosphere having a dew point of -50°C or less.

<Examples 6 to 10>

Evaluation cells of Examples 6 to 10 were made in the same manner as in Examples 1 to 5, except that for the iron cyanide complex, potassium ferricyanide: $K_3[Fe(CN)_6]$ was used instead of potassium ferrocyanide.

<Comparative Example 1>

An evaluation cell of Comparative Example 1 was made in the same manner as in Example 1, except that the negative electrode surface was not covered with the iron cyanide complex.

[Evaluation]

The evaluation cell was sandwiched by a pair of 80 × 80 cm stainless steel (thickness 2 mm) clamps to be pressurized and fixed at 0.2 MPa. Then, in a thermostatic chamber of 25°C, charging and discharging were performed under the following conditions, and the initial charge and discharge efficiency (%) was determined.
For the charging, the following first charging and second charging were performed.

(First charging)

Under an environment of 25°C, constant current charging was performed at 0.5 C (1 C is an electric current value at which the designed capacity is discharged by 1 hour) until the battery voltage reached 3.6 V. The electric current value and charging time at that time were measured, and a charge capacity C1 (mAh) was determined. Afterwards, the evaluation cell was allowed to stand for 24 hours under an environment of 25°C.

(Second charging)

Under an environment of 25°C, constant current charging was performed at 0.3 C until the battery voltage reached 4.2 V, and thereafter, constant voltage charging was performed at 4.2 V until the current reached below 0.05 C. The electric current value and charging time at that time were measured, and a charge capacity C2 (mAh) was determined.

(Discharging)

After the second charging, the evaluation cell was allowed to stand for 20 minutes under an environment of 25°C. Afterwards, constant current discharging was performed at 0.3 C until the voltage reached 2.5 V, and thereafter, constant voltage discharging was performed at 2.5 V until the current reached below 0.05 C. The electric current value and charging time at that time were measured, and a discharge capacity D (mAh) was determined.
Using the above-described charge capacities C1 to C2 and discharge capacity D, the initial charge and discharge efficiency (%) was determined by the following formula.

$$\text{Initial charge and discharge efficiency} = \{ D/(C1 + C2) \} \times 100$$

The evaluation results are shown in Table 1. In Table 1, the coverage shows the coverage of the negative electrode surface (negative electrode mixture layer surface) with the iron cyanide complex determined by the above-described method. The discharge capacity ratio (%) shows the ratio (percentage) of the discharge capacity D of the evaluation cells relative to the discharge capacity D of the evaluation cell of Comparative Example 1.

Table 1

| | | Negative Electrode | | | Evaluation | |
|---|---|---|---|---|---|---|
| | | Negative electrode active material | Iron cyanide complex | Coverage (%) | Initial charge and discharge efficiency (%) | Discharge capacity ratio (%) |
| | Example 1 | Graphite | Potassium ferrocyanide | 5 | 82 | 99 |
| | Example 2 | | | 10 | 85 | 99 |
| | Example 3 | | | 50 | 86 | 99 |
| | Example 4 | | | 90 | 86 | 98 |
| | Example 5 | | | 95 | 87 | 96 |
| | Example 6 | Graphite | Potassium ferricyanide | 5 | 82 | 100 |
| | Example 7 | | | 10 | 85 | 99 |
| | Example 8 | | | 50 | 86 | 99 |
| | Example 9 | | | 90 | 87 | 98 |
| | Example 10 | | | 95 | 87 | 95 |
| | Comp. Ex. 1 | Graphite | - | - | 80 | 100 |

In the evaluation cells of Examples 1 to 5, copper ions dissolved from the positive electrode were trapped by potassium ferrocyanide covering the negative electrode surface, copper deposition at the negative electrode was suppressed, and the initial charge and discharge efficiency improved. In particular, the evaluation cells of Examples 2 to 4 in which the coverage with potassium ferrocyanide was 10% to 90% achieved a high initial charge and discharge efficiency while keeping the discharge capacity ratio of about the same as that of the evaluation cell of Comparative Example 1.

In the evaluation cells of Examples 6 to 10, copper ions dissolved from the positive electrode were trapped by potassium ferricyanide covering the negative electrode surface, copper deposition at the negative electrode was suppressed, and the initial charge and discharge efficiency improved. In particular, the evaluation cells of Examples 7 to 9 in which the coverage with potassium ferricyanide was 10% to 90% achieved a high initial charge and discharge efficiency while keeping the discharge capacity ratio of about the same as that of the evaluation cell of Comparative Example 1.

In the evaluation cell of Comparative Example 1, in which the negative electrode surface was not covered with the iron cyanide complex, copper ions dissolved from the positive electrode were not trapped by the iron cyanide complex, and therefore copper deposited at the negative electrode, and the initial charge and discharge efficiency decreased.

[Industrial Applicability]

The nonaqueous electrolyte secondary battery of the present invention is used for, for example, a power source for small devices such as smartphones, and a power source for vehicles.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug, 9: positive electrode, 10: negative electrode, 11: separator, 12: negative electrode main body, 13: negative electrode current collecting sheet, 14: negative electrode mixture layer, 15: cover layer

**Claims**

1.  A negative electrode for a nonaqueous electrolyte secondary battery, the negative electrode comprising an iron cyanide complex.

2.  The negative electrode for a nonaqueous electrolyte secondary battery of claim 1, wherein the iron cyanide complex is at least one selected from the group consisting of ferrocyanide and ferricyanide.

3.  The negative electrode for a nonaqueous electrolyte secondary battery of claim 2, wherein the ferrocyanide is at least one selected from the group consisting of potassium ferrocyanide, sodium ferrocyanide, calcium ferrocyanide, and ammonium ferrocyanide.

4.  The negative electrode for a nonaqueous electrolyte secondary battery of claim 2 or 3, wherein the ferricyanide is at least one selected from the group consisting of potassium ferricyanide, sodium ferricyanide, calcium ferricyanide, and ammonium ferricyanide.

5.  The negative electrode for a nonaqueous electrolyte secondary battery of any one of claims 1 to 4, wherein particles of the iron cyanide complex have an average particle size of 0.1 $\mu$m or more and 50 $\mu$m or less.

6.  The negative electrode for a nonaqueous electrolyte secondary battery of any one of claims 1 to 5, comprising a negative electrode active material, wherein
    an amount of 0.01 parts by mass or more and 10 parts by mass or less of the iron cyanide complex is contained relative to 100 parts by mass of the negative electrode active material.

7.  The negative electrode for a nonaqueous electrolyte secondary battery of any one of claims 1 to 5, including a negative electrode mixture layer including a negative electrode active material, a negative electrode current collecting sheet supporting the negative electrode mixture layer, and the iron cyanide complex attached to a surface of the negative electrode mixture layer at an opposite side to a surface supported by the negative electrode current collecting sheet.

8.  The negative electrode for a nonaqueous electrolyte secondary battery of claim 7, wherein the surface of the negative electrode mixture layer is covered by the iron cyanide complex with a coverage of 5% or more and 95% or less.

9.  A nonaqueous electrolyte secondary battery comprising a positive electrode, a negative electrode, and a nonaqueous electrolyte, wherein
    the negative electrode is the negative electrode for a nonaqueous electrolyte secondary battery of any one of claims 1 to 8.

10. A separator for a nonaqueous electrolyte secondary battery, the separator comprising an iron cyanide complex.

11. The separator for a nonaqueous electrolyte secondary battery of claim 10, wherein the iron cyanide complex is at least one selected from the group consisting of ferrocyanide and ferricyanide.

12. The separator for a nonaqueous electrolyte secondary battery of claim 11, wherein the ferrocyanide is at least one selected from the group consisting of potassium ferrocyanide, sodium ferrocyanide, calcium ferrocyanide, and ammonium ferrocyanide.

13. The separator for a nonaqueous electrolyte secondary battery of claim 11 or 12, wherein the ferricyanide is at least one selected from the group consisting of potassium ferricyanide, sodium ferricyanide, calcium ferricyanide, and ammonium ferricyanide.

**14.** The separator for a nonaqueous electrolyte secondary battery of any one of claims 10 to 13, wherein particles of the iron cyanide complex have an average particle size of 0.1 $\mu$m or more and 50 $\mu$m or less.

**15.** The separator for a nonaqueous electrolyte secondary battery of any one of claims 10 to 14, including a substrate sheet, and the iron cyanide complex attached to a surface of the substrate sheet.

**16.** The separator for a nonaqueous electrolyte secondary battery of claim 15, wherein the surface of the substrate sheet is covered by the iron cyanide complex by a coverage of 5% or more and 95% or less.

**17.** A nonaqueous electrolyte secondary battery comprising a positive electrode, a negative electrode, a separator interposed between the positive electrode and the negative electrode, and a nonaqueous electrolyte, wherein the separator is the separator for a nonaqueous electrolyte secondary battery of any one of claims 10 to 16.

FIG. 1

FIG. 2

## INTERNATIONAL SEARCH REPORT

| International application No. |
|---|
| **PCT/JP2022/000626** |

### A. CLASSIFICATION OF SUBJECT MATTER

*H01M 4/13*(2010.01)i; *H01M 4/62*(2006.01)i; *H01M 10/05*(2010.01)i; *H01M 10/0566*(2010.01)i; *H01M 50/443*(2021.01)i; *H01M 50/449*(2021.01)i
FI:  H01M4/13; H01M10/0566; H01M10/05; H01M50/443 M; H01M50/449; H01M4/62 Z

According to International Patent Classification (IPC) or to both national classification and IPC

### B. FIELDS SEARCHED

Minimum documentation searched (classification system followed by classification symbols)

H01M4/13; H01M4/62; H01M10/05; H01M10/0566; H01M50/443; H01M50/449

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2016-091699 A (UNIV TSUKUBA) 23 May 2016 (2016-05-23) | 1, 2, 9 |
|   | claim 1, paragraphs [0014]-[0040] | |
| A | | 3-8, 10-17 |
| X | CN 109326798 A (HARBIN INSTITUTE OF TECHNOLOGY) 12 February 2019 (2019-02-12) | 1-4, 9 |
|   | claims 1-8 | |
| A | | 5-8, 10-17 |
| X | CN 108172896 A (SHENZHEN INSTITUTES OF ADVANCED TECHNOLOGY) 15 June 2018 (2018-06-15) | 1-3, 9 |
|   | paragraphs [0048]-[0117] | |
| A | | 4-8, 10-17 |
| X | CN 108598412 A (CENTRAL SOUTH UNIVERSITY) 28 September 2018 (2018-09-28) | 1, 2, 5, 9 |
|   | claims 1-10, paragraphs [0057]-[0070] | |
| A | | 3, 4, 6-8, 10-17 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 February 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2022/000626** |

**C. DOCUMENTS CONSIDERED TO BE RELEVANT**

| Category* | Citation of document, with indication, where appropriate, of the relevant passages | Relevant to claim No. |
|---|---|---|
| X | CN 107799700 A (HARBIN INSTITUTE OF TECHNOLOGY) 13 March 2018 (2018-03-13) claims 1-5, examples 1-8 | 10-13, 15, 17 |
| A | | 1-9, 14, 16 |

Form PCT/ISA/210 (second sheet) (January 2015)

International application No.

**PCT/JP2022/000626**

| Patent document<br>cited in search report | | | Publication date<br>(day/month/year) | Patent family member(s) | Publication date<br>(day/month/year) |
|---|---|---|---|---|---|
| JP | 2016-091699 | A | 23 May 2016 | (Family: none) | |
| CN | 109326798 | A | 12 February 2019 | (Family: none) | |
| CN | 108172896 | A | 15 June 2018 | (Family: none) | |
| CN | 108598412 | A | 28 September 2018 | (Family: none) | |
| CN | 107799700 | A | 13 March 2018 | (Family: none) | |

Form PCT/ISA/210 (patent family annex) (January 2015)

**EP 4 318 631 A1**

REFERENCES CITED IN THE DESCRIPTION

**Patent documents cited in the description**

- JP 5507083 B